# EUROPEAN PATENT SPECIFICATION

(11) **EP 1 441 991 B1**
(45) Date of publication and mention of the grant of the patent: **08.02.2006**
(21) Application number: 01978809.0
(22) Date of filing: 18.10.2001
(51) Int. Cl.: C03B 37/018

(54) **A PROCESS OF MAKING RARE EARTH DOPED OPTICAL FIBRE**
VERFAHREN ZUR HERSTELLUNG EINER MIT SELTENEN ERDEN DOTIERTEN OPTISCHEN FASER
PROCEDE DE FABRICATION DE FIBRES OPTIQUES DOPEES A LA TERRE RARE

(43) Date of publication of application: 04.08.2004
(73) Proprietor: COUNCIL OF SCIENTIFIC AND INDUSTRIAL RESEARCH, New Delhi 110 001 (IN); BAR-ILAN UNIVERSITY, Ramat-Gan 52900 (IL)
(72) Inventor: SEN, Ranjan Central Glass and Ceramic Research, 700 032 Calcutta (IN); CHATTERJEE, Miss, Minati Central Glass and Ceramic, 700032 Calcutta (IN); NASKAR, Milan, Kanti Central Glass and Ceramic, 700 032Calcutta (IN); PAL, Mrinmay Central Glass and Ceramic Research, 700 032 Calcutta (IN); PAUL, Mukul, Chandra Central Glass and Ceramic, 700 032Calcutta (IN); BHADRA, Shyamal, Kumar Central Glass and Ceramic, 700 032 Calcutta (IN); DASGUPTA, Kamal Central Glass and Ceramic Research, 700 032 Calcutta (IN); GANGULI, Dibyendu Central Glass and Ceramic, 700 032 Calcutta (IN); BANDYOPADHYAY, Tarun Central Glass and Ceramic, 700 032Calcutta (IN); GEDANKEN, Aharon Bar-Ilan University, 52900 Israel (IL)
(74) Representative: Fairbairn, Angus Chisholm
(86) International application number: PCT/IN2001/000184
(87) International publication number: WO 2003/033423

(56) References cited:
- EP-A- 0 443 781
- WO-A-01/53223
- US-A- 5 058 976
- DIGIOVANNI D J ET AL: "NEW OPTICAL FIBER FABRICATION TECHNIQUE USING SOL-GEL DIPCOATING" PROCEEDINGS OF THE OPTICAL FIBER COMMUNICATION CONFERENCE. SAN DIEGO, FEB. 18 - 22, 1991, NEW YORK, IEEE, US, vol. CONF. 14, 18 February 1991 (1991-02-18), page 62 XP000270359 ISBN: 1-55752-166-2
- PATENT ABSTRACTS OF JAPAN vol. 1999, no. 12, 29 October 1999 (1999-10-29) & JP 11 180719 A (SUMITOMO ELECTRIC IND LTD), 6 July 1999 (1999-07-06)
- MATEJEC V ET AL: "PREPARATION OF OPTICAL CORES OF SILICA OPTICAL FIBERS BY THE SOL-GEL METHOD" JOURNAL OF SOL-GEL SCIENCE AND TECHNOLOGY, KLUWER ACADEMIC PUBLISHERS, DORDRECHT, NL, vol. 8, no. 1/2/3, 1997, pages 889-893, XP000684795 ISSN: 0928-0707

## Description

### Technical Field

The present invention relates to a Process of Making Rare Earth Doped Optical Fibre.

### Background Art

High silica based optical fibres are firmly established as the most efficient interconnection media for optical telecommunication networks. The fibres are used as the passive transmission media to guide optical signals over long distances. In contrast, rare-earth (RE) ions if doped into the core of such fibres, make them optically active due to the characteristic emission of the RE when pumped at suitable wavelengths. Because of this property RE doped fibres have shown great potential for use as active devices for photonic applications like optical amplifiers and fibre lasers at various wavelengths. The fibres are also found to be promising candidates for their application as sensors for monitoring temperature, radiation dose etc.

Erbium doped fiber which is the active medium of an EDFA (erbium doped fiber amplifier) has been an enabling technology for optical networks operating in the third telecommunication window between 1530 and 1610 nm. EDFA can simultaneously amplify several optical channels in a single fibre which has enabled the implementation of DWDM (dense wavelength division multiplexing) technology with the potential of increasing the bandwidth of long distance transmission systems from Gb/s to Tb/s ranges. EDFAs exhibit high gain, large bandwidth, low noise, polarisation insensitive gain, substantially reduced cross talk problems and low insertion losses at the operating wavelengths. The deployment of EDFA has spurred a tremendous growth in advanced telecommunication systems replacing the conventional optoelectronic repeaters.

While the Erbium Doped Fibre (EDF) remains the most important for telecommunication applications, fibres doped with other rare earths are gaining importance mostly for development of laser sources from visible to mid infrared regions. Development of broadband amplifiers commencing from 1300 nm is an area of great interest using various REs. Lasing and amplification have been demonstrated at several wavelengths with the incorporation of the various rare-earths.

Reference may be made to Townsend J.E., Poole S.B., and Payne D.N., Electronics Letters, Vol. 23 (1987) p-329, 'Solution-doping technique for fabrication of rare-earth-doped optical fibre' wherein the Modified Chemical Vapour Deposition (MCVD) process is used to fabricate the preform with a step index profile and desired core-clad structure while solution doping is adopted for incorporation of the active ion. The steps involed in the process are as follows:
- A conventional cladding doped with P₂O₅ and F is deposited within a high silica glass substrate tube to develop matched clad or depressed clad type structure.
- The core layers of predetermined composition containing index raising dopant like GeO₂ are deposited at a lower temperature to form unsintered porous soot.
- The tube with the deposit is immersed into an aqueous solution of the dopant precursor (typical concentration 0.1 M) up to 1 hour. Any soluble form of the dopant ion is suitable for preparation of the solution although rare earth halides have been mostly used.
- Following immersion, the tube is rinsed with acetone and remounted on lathe.
- The core layer containing the RE is dehydrated and sintered to produce a clear glassy layer. Dehydration is carried out a temperature of 600°C by using chlorine. The level of OH⁻ is reduced below 1ppm using Cl₂ / O₂ in the ratio of 5:2, provided the drying time exceeds 30 min.
- Collapsing in the usual manner to produce a solid glass rod called preform.
- Fibre drawing is conventional.

Reference may also be made to DiGiovanni D.J., SPIE Vol. 1373 (1990) p-2 "Fabrication of rare-earth-doped optical fibre' wherein the substrate tube with the porous core layer is soaked in an aqueous or alcoholic solution containing a nitrate or chloride of the desired RE ion. The tube is drained, dried and remounted on lathe. The dehydration is carried out by flowing dry chlorine through the tube at about 900°C for an hour. After dehydration, the layer is sintered and the tube is collapsed to be drawn to fibre.

Reference may also be made to Ainslie B.J., Craig S.P., Davey S.T., and Wakefield B., Material Letters, Vol. 6, (1988) p-139, " The fabrication, assessment and optical properties of high- concentration Nd³⁺ and Er³⁺ doped silica based fibres" wherein optical fibres based on Al₂O₃ - P₂O₅ - SiO₂ host glass doped with high concentrations of Nd³⁺ and Er³⁺ have been fabricated by solution method and quantified. Following the deposition of cladding layers P₂O₅ doped silica soot is deposited at lower temperature. The prepared tubes are soaked in an alcoholic solution of 1M Al(NO₃)₃ + various concentrations of ErCl₃ and NdCl₃ for 1 hour. The tubes are subsequently blown dry and collapsed to make preforms in the usual way. Aluminium (Al) is said to be a key component in producing high RE concentrations in the core centre without clustering effect. It is further disclosed that Al and RE profile lock together in some way which retards the volatility of RE ion. The dip at the core centre is observed both for P and GeO₂ .

Reference may also be made to US Patent No. 5,005,175 (1991) by Desuvire et al., 'Erbium doped fiber amplifier" wherein the fibre for the optical amplifier comprises a single mode fibre doped with erbium in the core having a distribution profile of the RE ion whose radius is less than 1.9 µm while the radius of the mode of the pump signal exceeds 3 µm. The numerical aperture (NA) of the fibres varies from 0.2 to 0.35 and the core is doped with both Al and Ge oxides to increase the efficiency. The fibre with such design is reported to have increased gain and lower threshold compared to the conventional Er doped fibre amplifiers.

Reference may also be made to US Patent No. 5,778,129 (1998) by Shukunami et. al., 'Doped optical fibre having core and clad structure for increasing the amplification band of an optical amplifier using the optical fibre' wherein the porous core layer is deposited after developing the cladding inside a quartz tube by MCVD process and solution doping method is employed to impregnate Er as the active ion into the porous core to be followed by vitrification and collapsing for making the preform. The solution also contain compounds of Al, say chlorides, for co-doping of the core with Al in order to expand the amplification band. The Er and Al doped glass constitutes first region of the core. Surrounding this are the second and third regions of the core. The third region contains Ge to increase the refractive index. The second region has an impurity concentration lower than both those of first and third regions and consequently low RI also. The second region acts as a barrier to prevent diffusion of the active dopant.

Reference may also be made to US Patent No. 5474588 (1995) by Tanaka, D. et. al., 'Solution doping of a silica with erbium, aluminium and phosphorus to form an optical fiber' wherein a manufacturing method for Er doped silica is described in which silica glass soot is deposited on a seed rod (VAD apparatus) to form a porous soot preform, dipping the said preform into an ethanol solution containing an erbium compound, an aluminium compound and a phosphoric ester, and desiccating said preform to form Er, Al and P containing soot preform. The desiccation is carried out for a period of 24 -240 hours at a temperature of 60° - 70 °C in an atmosphere of nitrogen gas or inert gas. This desiccated soot preform is heated and dehydrated for a period of 2.5 - 3.5 hours at a temperature of 950° - 1050 °C in an atmosphere of helium gas containing 0.25 to 0.35% chlorine gas and further heated for a period of 3-5 hours at a temperature of 1400° - 1600°C to render it transparent, thereby forming an erbium doped glass preform. The segregation of AlCl₃ in the preform formation process is suppressed due to the presence of phosphorus and as a result, the doping concentration of Al ions can be set to a high level (>3 wt%). The dopant concentration and component ratio of Er, Al and P ions are claimed to be extremely accurate and homogeneous in radial as well as in longitudinal directions.

Reference may also be made to US Patent No. 5123940 (1992) by DiGiovanni et. al., 'Sol-Gel doping of optical fibre preform' wherein the method comprises collapsing a silica - based glass tube to make a preform and drawing fibre from the preform. Before collapsing the tube, one or more glass layers are formed in the inner surface of the glass tube by dip-coating with a stable dispersion (sol) containing the metal-alkoxides and dopant cations including RE-ions. The metal-alkoxides dissolved in an alcoholic or aquous solvent contains required quantity of the dopants, polymerising the sol to form a gel, drying and sintering the tube. A wide variety of dopant materials, in the form of salts or alkoxides are easily incorporated by dissolving them in the solvent. The method suffers disadvantage that there is a possibility of evaporation of the RE-salts during sintering at high temperature, there by causing inhomogeneous distribution of RE-ions through out the length of the preform.

Reference may also be made to the publication by Matejec et al., 'Properties of optical fibre preforms prepared by inner coating of substrates tubes' Ceramics-Silicaty, **45** (2), 62 (2001) wherein the method consists of collapsing a silica based glass tube containing the required dopant cations to a preform and drawing fibre from the preform. Before collapsing the tube, one or more glass layers are formed in the inner surface of the glass tube by raising and lowering the sol level at a fixed velocity. The sol contained the silicon tetraethoxide (TEOS) and dopant cations including RE-ions. The TEOS dissolved in an alcoholic or aqueous solvent contains required quantity of the dopants, polymerizing the sol to form a gel followed by drying and sintering the tube. The main disadvantage of the method is that there is every possibility of evaporation of the RE salts during sintering at high temperature, resulting in an inhomogeneous distribution of RE-ions throughout the length of the preform.

**A few of the drawbacks of the above mentioned processes are as follows:**
1. Deposition of porous silica soot layer at a temperature of 1200 - 1400 °C by Chemical Vapour Deposition (CVD) process inside a substrate silica tube or on a seed rod (VAD or OVD apparatus).
2. The porosity of the soot layer controls the RE incorporation and the homogeneity along the length of the preform.
3. The control of porosity of the deposited unsintered layer is difficult as it is extremely sensitive to the deposition temperature, burner traverse speed and flow of the reactant materials. This leads to variation in soot density and composition along the length of the tube.
4. The dipping procedure of the soot containing preform into the RE solution is critical due to the possibility of generation of local imperfections and concentration variation in the core of the preform.
5. Minor variation in dipping parameters coupled with the porosity of the unsintered soot layer leads to considerable change in RE concentration as well as radial distribution in the core of the preform.
6. The dipping parameters and the porosity of the soot layer are critical to obtain good core-clad interface and minimise attenuation of the fibre.
7. The dopant materials are concentrated in the pores of the deposited layer. As a result, clusters or microcrystallites of dopants tend to form both before sintering and during the steps of sintering and collapsing of the glass materials, giving rise to inhomogeneous distribution of the dopant materials.
8. Formation of microcrystallites causes scattering of light and increases the attenuation of the fibre.
9. Evaporation of the solvent leaves behind a residue containing the salt of the dopant cations or RE oxychloride which during dehydration in the chlorine atmosphere or sintering at high temperature volatilises, creating a dip in concentration near the inner surface of the porous layer.
10. Dehydration and sintering of the RE chloride impregnated soot layer give rise to compositional variation due to the vaporization of the dopant salt as well as GeO₂ in the core.
11. The process suffers from reliability/repeatability due to its sensitivity to the parameters during various stages of processing such as deposition, solution doping, drying and sintering.

WO-A-01/53223 relates to a sol-gel method of preparing powder for use in forming glass fibres, by forming a mixture of glass precursors and dopants in a solvent, hydrolysing the mixture, inducing or allowing the mixture to condense to form colloidal particles, treating the mixture bromine to remove water and hydroxide groups, drying to form a powder, and calcining to form a calcined powder suitable for processing into a glass. The powder can be formed into glass fibres by depositing a solvent suspension of the powder on the inner surface of a glass tube and heating the tube to convert the suspension into a glass and collapse the tube into a glass fibre.

### Objects of the invention:

The main object of the present invention is to provide a process for making rare earth doped optical fibre which obviates the drawbacks as detailed above.

Another object of the present invention is to provide a method of fabricating RE doped preforms and optical fibres by using RE coated silica nanoparticles as precursors.

Still another object, in an embodiment of the present invention, is to prepare RE (Er, Nd, Eu etc.) coated silica nanoparticles by a known technique. (Ref :'Sonochemical Preparation and Characterization of Eu₂O₃ and Tb₂O₃) Doped in and Coated on Silica and Alumina Nanoparticles', A. Patra, E. Sominska, S. Ramesh, Yu. Koltypin, Z. Zhong, H. Minti, R. Reisfeld and A. Gedanken, J. Phys, Chem. B, Vol 103 (17) pp 3361-3365).

Yet another object, in an embodiment of the present invention, is to disperse the rare-earth coated silica nanoparticles in sol under sonication containing germanium tetraethoxide and aluminium salt.

Still another object, in an embodiment of the present invention, of the present invention is to control the viscosity of the sol and apply a sol-gel thin film inside high purity silica glass tube by the dip coating technique.

Yet another object, in an embodiment of the present invention, of the present invention is to optimize the lifting speed for controlling the thickness of the coating to maintain the desired clad-core dimensions in the preform.

Still another object, in an embodiment of the present invention, of the present invention is to control the viscosity of the sol, pH and the lifting speed to obtain homogeneous and uniform coating along the length of the tube.

Yet another object, in an embodiment of the present invention, of the present invention is to optimize the leading percentage of the nanoparticles and other codopants in the sol.

Still another object, in an embodiment of the present invention, of the present invention is to reduce the possibility of change in composition of the particulate core layer due to evaporation of the RE salt during drying and sintering.

Yet another object, in an embodiment of the present invention, of the present invention is to produce preforms with desired RE concentration in the core and good homogeneity along the length of the preform.

Still another object, in an embodiment of the present invention, of the present invention is to reduce the time period of processing the silica tube at high temperature for fabrication of RE doped preforms.

Yet another object, in an embodiment of the present invention, is to reduce the number of steps of the process to make the process more simple and economic.

Still another object, in an embodiment of the present invention, of the present invention is to process the tube at ambient temperature before sintering and collapsing instead of high temperature involved in the CVD process to it more simple and economic.

Yet another object, in an embodiment of the present invention, of the present invention it to reduce the requirement of precision equipments for fabrication and consequently reduce the capital investment and cost of the product.

Still another object, in an embodiment of the present invention, of the present invention is to provide a process where the numerical aperture of the fibre is varied from 0.10 to 0.30 maintaining RE concentration in the core between 50 to 5000 ppm along to produce fibres suitable for application as amplifiers, fibre lasers and sensors for different purposes.

Yet another object, in an embodiment of the present invention, of the present invention is to make the process less sensitive to the process parameters and consequently make it more reliable and economic.

The novelty of the present invention lies in eliminating the step of the formation of porous soot layer at high temperate (1000°C or above) by CVD process inside a fused silica glass tube for formation of the core. Instead a thin silica gel coating containing other dopants in desired proportions is applied through a silica sol at ambient temperature. The above method ensures a better control of the characteristics of the coated layer and uniformity along the length of the tube. The inventive step further includes elimination of the step of the incorporation of the rare-earth ions into the porous soot layer following the solution-doping technique. The rare-earth oxide coated silica nanoparticles are dispersed at ambient temperature in the silica sol mentioned above under sonication thereby further eliminating the formation of microcrystallites and clusters of rare-earth ions. The elimination of the possibility of evaporation of RE salts at high temperatures due to the direct addition of RE oxides is another inventive step of the process which prevents change in composition including variation of RE concentration in the core and also reduces the possibility of formation of RE dip at the core centre.

The RE incorporation efficiency is much higher than the conventional processes. The process thus ensures better control of RE concentration in the doped region and homogeneous distribution of RE ions along the radial direction as well as the longitudinal direction. As a result the reproducibility and reliability of the process increase to a great extent. The addition of Ge (OET)₄ at ambient temperature in the silica sol above reduces the quantity of GeCl₄ which is required at high temperature to achieve the desired NA. All the steps combined make the process simple and more economic than the conventional processes.

Accordingly, the present invention provides a process for making rare earth doped optical fibre using stable dispersions (sol) of rare earth (RE) oxide coated silica nanoparticles and applying a thin coating of the said silica sol containing suitable dopants selected from Ge, Al, P etc., on the inner surface of a silica glass tube.

In an embodiment of the present invention, the process comprises (a) obtaining rare earth oxide coated (Eu₂O₃, Nd₂O₃, Tb₂O₃, Er₂O₃ etc.) silica nanoparticles by sonochemical method, (b) preparation of stable dispersions of the above RE containing powders in the desired proportion in presence of suitable dopants like Al₂O₃, GeO₂ etc. in a silica sol of Si(OC₂H₅)₄ under sonication,(c) applying a thin coating of the silica sol on the inner surface of high purity clear fused silica glass tubes by sol-gel dip coating technique, (d) drying the coated layer in air at 70 to 150°C, (e) mounting the tube on glass working lathe for processing by MCVD technique, (f) dehydrating the coated layer inside the tube at a temperature in the range of 800-1200°C in presence of excess Cl₂, (g) sintering the coated layer in presence of a mixture of oxygen and helium in the temperature range of 1400 to 1800°C for formation of the core, (h) collapsing the tube by usual method at a temperature in the range of 2000-2300 °C to obtain a preform, (i) overcladding the preform with silica tube and (j) drawing fibres of standard dimensions from the preform by the conventional methods.

In a further embodiment of the present invention, the RE oxide is selected from Eu₂O₃, Nd₂O₃, Tb₂O₃ and Er₂O₃ for preparation of the silica nanoparticles.

In another embodiment of the present invention, P₂O_{5,} and F doped synthetic cladding is deposited within a silica glass substrate tube prior to development of the coating by known method like Modified Chemical Vapour Deposition (MCVD) process to obtain matched or depressed clad type structure in the preform.

In a further embodiment of the present invention, particle size of the RE coated SiO₂ powders ranges from 50 to 200 nm.

In still another embodiment of the present invention, the composition in oxide mol% of SiO₂ : RE₂O₃ in RE₂O₃ coated SiO₂ powders varies from 99.5 : 0.5 to 95 : 5.

In yet another embodiment of the present invention, the equivalent oxide mol% of SiO₂ in the dispersion varies from 98.5 to 90.5.

In still another embodiment of the present invention, a silica sol prepared with Si(OC₂H₅)₄ was used as the diluent of the RE₂O₃ coated silica powder.

In yet another embodiment of the present invention; the equivalent oxide mol% of GeO₂ in the dispersion varies from 1.0 to 5.0.

In still another embodiment of the present invention, GeO₂ was added through Ge(OC₂H₅)₄ in the silica sol.

In yet another embodiment of the present invention, the equivalent oxide mol% of Al₂O₃ in the dispersion ranges from 0.5 to 4.0.

In further embodiment of the present invention, Al₂O₃ is provided to the solvent in the form of aluminium salts such as chlorides, nitrates or any other salt soluble in the solvent.

In yet another embodiment of the present invention, the solution of aluminium salt is prepared using a solvent selected from alcohol and water.

In still another embodiment of the present invention, the oxide mol% of RE₂O₃ in the dispersion ranges from 0.01 to 0.60.

In yet another embodiment of the present invention, strong mineral acids used for preparing the sol for dispersion are selected from hydrochloric or nitric acid.

In still another embodiment of the present invention, the alcohol selected is soluable in the dispersion system.

In yet another embodiment of the present invention, the alcohol is selected from the group comprising of methyl alcohol, ethyl alcohol, propan-1-ol, propan-2-ol, butan-1-ol and butan-2-ol.

In yet another embodiment of the present invention, pH of the dispersion ranges from 1 to 5.

In still another embodiment of the present invention viscosity of the dispersion varies from 1 to 10 mPa s.

In yet another embodiment of the present invention sonication time of the dispersion ranges from 30 to 200 minutes.

In still another embodiment of the present invention settling time of the dispersion varies from 1 to 10 hours.

In yet another embodiment of the present invention lifting speed of the tube from the dispersion ranges from 4 to 15 cm/min.

In still another embodiment of the present invention baking temperature of the coated tube varies from 70° to 150°C.

In yet another embodiment of the present invention baking time of the coated tube ranges from 0.5 to 5 h.

In still another embodiment of the present invention the core composition is selected from the group comprising of RE₂O₃ +SiO₂+GeO₂, RE₂O₃ +SiO₂+GeO₂ +Al₂O₃, RE₂O₃ +SiO₂+GeO₂ +Al₂O₃ +P₂O₅ and RE₂O₃ +SiO₂+GeO₂ + P₂O₅.

In still another embodiment of the present invention the temperature of the RE oxide containing core layer is increased in steps of 50 to 200°C during sintering depending on the composition and Al/RE concentration of the core layer.

In yet another embodiment of the present invention, the mixture of O₂ and He is in the range of 3:1 to 9:1 during sintering.

In still another embodiment of the present invention, source of chlorine is CCl₄ where helium is used as carrier gas.

In yet another embodiment of the present invention, the proportion of Cl₂: O₂ during drying varies from 1.5 : 1 to 3.5 : 1.

In still another embodiment of the present invention, the dehydration period lies between 1 to 2 hours.

In yet another embodiment of the present invention, the core layer is sintered in the presence of germania to facilitate germania incorporation and to obtain appropriate numerical aperture value.

In still another embodiment of the present invention, germania is supplied to the core layer during sintering by including GeCl₄ with the input oxygen.

In another embodiment of the present invention, the sintering is carried out at a temperature of 1200°C to 1400°C.

In yet another embodiment of the present invention, depending on the composition of the core, POCl₃ is added to the input gas mixture during sintering.

In another embodiment of the present invention, the core layer is doped with P₂O₅ to facilitate RE incorporation.

In still another embodiment of the present invention P₂O₅ and GeO₂ concentrations vary from 0.5 to 5.0 mol% and 3.0 to 25.0 mol% respectively in the RE doped core layer of the preform.

In yet another embodiment of the present invention the numerical aperture of the fibre is varied from 0.10 to 0.30.

In another embodiment of the present invention, RE concentration in the core is maintained in the range of 50 to 4000 ppm to produce fibres suitable for application as amplifiers, fibre lasers and sensors or different purposes.

In a further embodiment of the present invention, codopants like Al and other rare earths are added to the core doped with a selected RE to fabricate fibres containing various dopants in the core in the concentration range of 50 to 5000 ppm and numerical aperture varying between 0.10 and 0.30.

In still another embodiment of the present invention the deposition of a porous soot layer at high temperature (1000°C or above) by CVD process inside a fused silica glass tube or on a seed rod (VAD or OVD apparatus) is eliminated for formation of the core.

In yet another embodiment of the present invention better control is achieved over the characteristics of the coated layer like porosity, thickness etc. and uniformity along the length of the tube.

In still another embodiment of the present invention the difficulties and uncertainties involved in incorporation of the rare-earth ions in desired concentration into the porous soot layer by the solution-doping technique and such other methods are eliminated.

In still another embodiment of the present invention the rare-earth oxide coated silica nanoparticles are dispersed at ambient temperature in the silica sol mentioned above under sonication thereby eliminating the possibility of formation of the microcrystallites and clusters of rare-earth ions as in the conventional techniques.

In yet another embodiment of the present invention the possibility of evaporation of RE salts at high temperatures is considerably eliminated due to the direct addition of RE oxides which prevents change in composition including variation of RE concentration in the core and also reduces the possibility of formation of RE dip at the core centre.

In still another embodiment of the present invention the process ensures better control of RE concentration in the doped region and homogeneous distribution of RE ions along the radial direction as well as throughout the length of the preform.

In yet another embodiment of the present invention the RE incorporation efficiency is much higher compared to the conventional techniques beacuse of direct addition of the RE oxides into the dispersion instead of the corresponding salt by the conventional techniques thereby minimising the possibility of evaporation and change in concentration.

In still another embodiment of the present invention the addition of Ge(OC₂H₅)₄ at ambient temperature in the silica sol above reduces the quantity of GeCl₄ which is required at high temperature to achieve the desired NA.

In yet another embodiment of the present invention the time period of processing the silica tube at high temperature and the number of steps involved for doping of RE ions by the conventional techniques for fabrication of the preform are considerably reduced.

In still another embodiment of the present invention the processing of the tube at ambient temperature before sintering and collapsing instead of high temperature involved in the CVD process makes the process less sensitive to the process parameters unlike the conventional processes.

In still another embodiment of the present invention the advantages described above increases the reproducibilty and reliability of the process to a great extent.

In yet another embodiment of the present invention the requirement of precision equipments for control of porous soot deposition, RE incorporation etc. during fabrication of the preform is considerably eliminated which will reduce the capital investment and cost of the product.

In still another embodiment of the present invention the advantages combined make the process simple and more economic than the conventional processes.

### Brief description of the drawings

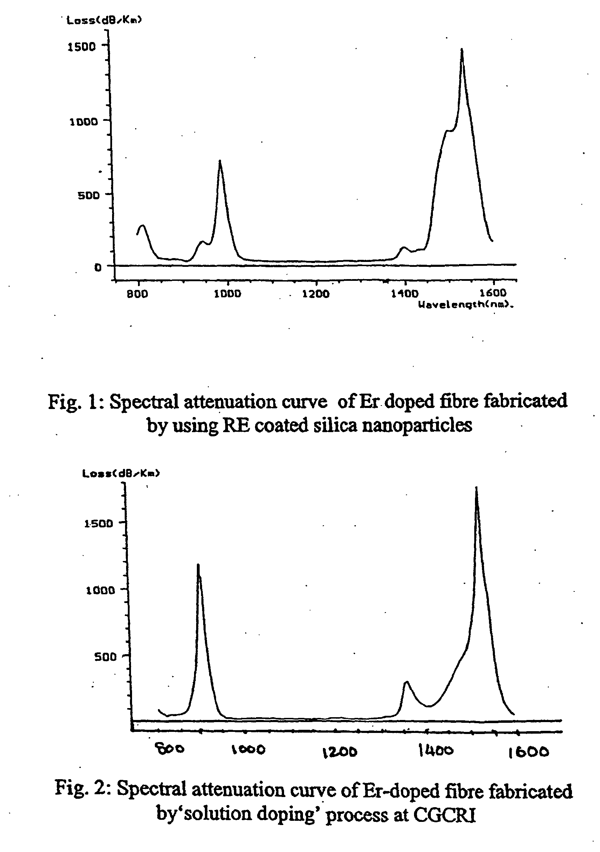

**Figure 1 & 2** represent respectively the spectral attenuation curve of Er doped fibre prepared from RE doped nanoparticles following the present process and that fabricated by conventional solution doping technique.

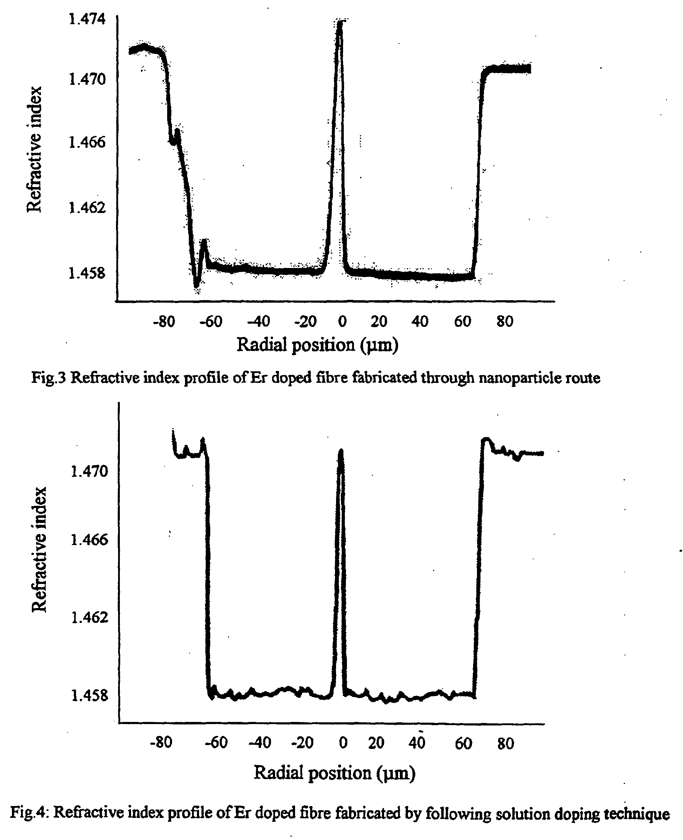

**Figure 3 & 4** show the refractive index profiles of Er doped fibre prepared through nanoparticle route and that by solution doping method respectively.

The invention is further explained with the help of following examples which should not be construed to limit the scope of the invention:
Sonochemical preparation of RE₂O₃- coated silica nanoparticles following the process mentioned in the Ref: 'Sonochemical Preparation and Characterization of Eu₂O₃ and Tb₂O₃ Doped in and Coated on Silica and Alumina Nanoparticles' A.Patra, E. Sominska, S. Ramesh, Yu. Koltypin, Z. Zhong, H. Minti, R. Reisfeld and A. Gedanken, J. Phys. Chem. B, Vol 103 (17) pp 3361-3365. (It does not form a part of the invention)

Amorphous silica microspheres in the size range of 50-250 nm were synthesized by the alkaline hydrolysis of tetraethoxysilane (Stober method). For the preparation of the RE₂O₃- coated silica nanoparticles with molar composition (100-x)SiO₂-xRE₂O₃, nanophased rare earth oxides were sonochemically deposited on the outer surface of spherical silica particles. For this purpose, rare earth nitrate used as the source of rare earth was prepared by dissolving rare earth oxide in a minimum amount of nitric acid followed by evaporating it to dryness. The dry nitrate was dissolved in calculated quantity of water to prepare the rare earth nitrate solution.

The required amount of silica microspheres was taken in a beaker and calculated quantity of water and rare earth nitrate solution, as prepared earlier, were then added to it. The open beaker with the material was kept in an ice-bath and subjected to sonication for 1h employing a direct immersion titanium horn (Vibracell, 20 kHz, 100 W/cm²). Required amount of 25% aqueous ammonia was thereafter added in drops into the beaker during sonication. The resulting product after sonication was washed thoroughly with water, centrifuged and finally dried under vacuum to obtain RE coated amorphous silica nanoparticles.

The above method is also suitable for the preparation of doped and co-doped silica particles containing Al₂O₃, GeO₂, Yb₂O₃ and other rare earth oxides.

### EXAMPLE 1

### Er-doped fibre

- Amorphous silica microspheres synthesized by hydrolysis of tetraethoxyorthosilicate (Stober method) were dispersed in a solution of erbium nitrate (kept in an ice bath) in a proportion of 98.5 mol% SiO₂ and 1.5 mol% Er₂O₃ under sonication followed by the addition of aqueous ammonia by known process. The resulting product was washed with water followed by centrifugation and drying under vacuum.
- A stable dispersion of composition 94.98SiO₂:3GeO₂:2Al₂O₃: 0.02Er₂O₃ (in equivalent oxide mol%) was prepared for the application of coating to the inner wall of high purity clear fused silica glass tubes.
- From the erbium oxide (Er₂O₃) coated silica powders with 98.5 mol% SiO₂, and 1.5 mol% Er₂O₃, a silica sol of composition of 94.98 equivalent mol% of SiO₂ and 0.02 equivalent mol% of Er₂O₃ was prepared by diluting with a slica sol containing the desired amount of silicon tetraethoxide (TEOS).
- Silica-germania sol containing 3 equivalent oxide mol% of germanium ethoxide [Ge(OC₂H₅)₄] was prepared through the hydrolysis of TEOS and [Ge(OC₂H₅)₄] with water and hydrochloric acid in presence of a mixed solvent of propan-1-ol and butan-2-ol. pH of the above sol was 1.5 ± 0.05 .
- 2 equivalent oxide mol% of [Al(NO₃)₃.9H₂O] and 0.02 equivalent mol% of Er₂O₃ through Er₂O₃ coated SiO₂ powders (after baking at 100°C for 1h) were dispersed in the above silica sol under sonication (26 kHz) for 80 mins.
- The resultant dispersion after allowing to settle for 2 h, was used to coat the inner wall of the throughly cleaned silica glass tubes with inner diameter of 17.8 mm. The outer wall of the tubes were properely masked with a suitable substance (parafilm).
- Coating was performed by dipping the silica glass tubes with a speed of 8 cm/min into the dispersion and lifting the same tube from the above dispersions with the same speed.
- The coated tubes were dried in air at 100°C for 1h.
- Oxidation at temperatures of 660°, 750°, 850° and 940°C with 2 passes of the burner at each temperature maintaining a constant He/O₂ ratio of 1:5.
- The dehydration was carried out at a temperature of 930°C with a Cl₂: O₂ ratio of 2.25 : 1 for a period of one hour.
- For sintering the temperature was increased in 3 steps up to 1220°C, each step consisting of 2 passes of the burner. GeCl₄ was added in controlled quantities during this stage with the input oxygen with two passes at 1220°C and one pass at 1425°C in order to adjust the NA of the preform / fibre.
- The tube was further heated to increase the temperature stepwise to 1650°C for complete sintering of the Ge, Er & Al containing coated layer. During sintering O₂ and He flow was in the ratio of of 5:1.
- The collapsing was done in 3 steps in the usual manner with positive oxygen pressure of 4 psi inside the tube to avoid any deformation in shape or geometry and excessive evaporation of GeO₂ or other oxides from the core.
- Overcladding was done to reduce the core:clad ratio to 3.4:125. The NA measured in the fibre was 0.21 ± 0.01.
- The Er³⁺ ion concentration in the fibre was 220 ppm approx. as measured from the absorption at selected wavelengths.

### EXAMPLE 2

### Nd-doped fibre

- Amorphous silica microspheres synthesized by hydrolysis of tetraethoxyorthosilicate (Stober method) were dispersed in a solution of Neodimium nitrate (kept in an ice bath) in a proportion of 98.5 mol% SiO₂ and 1.5 mol% Nd₂O₃ under sonication followed by the addition of aqueous ammonia by known process. The resulting product was washed with water followed by centrifugation and drying under vacuum.
- A stable dispersion of composition 94.8SiO₂: 3GeO₂ : 2Al₂O₃: 0.20 Nd₂O₃ (in equivalent oxide mol%) was prepared for the application of coating to the inner wall of high purity clear fused silica glass tubes.
- From the Neodimium oxide (Nd₂O₃) coated silica powders with 98.5 mol% SiO₂ and 1.5 mol% Nd₂O_{3,} a silica sol of composition of 94.8 equivalent mol% of SiO₂ and 0.20 equivalent mol% of Nd₂O₃ was prepared by diluting with a slica sol containing the desired amount of silicon tetraethoxide (TEOS).
- Silica-germania sol containing 3 equivalent oxide mol% of germanium ethoxide [Ge(OC₂H₅)₄] was prepared through the hydrolysis of TEOS and [Ge(OC₂H₅)₄] with water and hydrochloric acid in presence of a mixed solvent of propan-1-oI and butan-2-ol. pH of the above sol was 1.2 ± 0.05.
- 2 equivalent oxide mol% of [Al(NO₃)₃.9H₂O] and 0.20 equivalent mol% of Nd₂O₃ through Nd₂O₃ coated SiO₂ powders (after baking at 100°C for 5h) were dispersed in the above silica sol under sonication (26 kHz) for 80 mins.
- The resultant dispersion after allowing to settle for 2 h, was used to coat the inner wall of the throughly cleaned silica glass tubes with inner diameter of 17.9 mm. The outer wall of the tubes were properely masked with a suitable substance (parafilm).
- Coating was performed by dipping the silica glass tubes with a speed of 6 cm/min into the dispersion and lifting the same tube from the above dispersions with the same speed.
- The coated tubes were dried in air at 80°C for 1.5 h.
- Oxidation at temperatures of 700°, 820° and 910°C with 2 passes of the burner at each temperature maintaining a constant He/O₂ ratio of 1:6.
- The dehydration was carried out at a temperature of 900°C with a Cl₂: O₂ ratio of 2.5 : 1 for a period of 1.25 hour.
- For sintering the temperature was increased in 4 steps up to 1225°C, each step consisting of 2 passes of the burner. GeCl₄ was added in controlled quantities during this stage with the input oxygen with two passes at 1225°C and one pass at 1400°C in order to adjust the NA of the preform / fibre.
- The tube was further heated to increase the temperature stepwise to 1600°C for complete sintering of the Ge, Nd & Al containing coated layer. During sintering O₂ and He flow was in the ratio of of 4:1.
- The collapsing was done in 3 steps in the usual manner with positive oxygen pressure of 4 psi inside the tube to avoid any deformation in shape or geometry and excessive evaporation of GeO₂ or other oxides from the core.
- Overcladding was done to reduce the core:clad ratio to 3.5:125. The NA measured in the fibre was 0.22 ± 0.01.
- The Nd³⁺ ion concentration in the fibre was 2350 ppm approx.as measured from the absorption at selected wavelengths.

### EXAMPLE 3

### Eu-doped fibre

- Amorphous silica microspheres synthesized by hydrolysis of tetraethoxyorthosilicate (Stober method) were dispersed in a solution of europium nitrate (kept in an ice bath) in a proportion of 99.0 mol% SiO₂ and 1.0 mol% Eu₂O₃ under sonication followed by the addition of aqueous ammonia by known process. The resulting product was washed with water followed by centrifugation and drying under vacuum.
- A stable dispersion of composition 95.99SiO₂: 3GeO₂ : 1Al₂O₃: 0.01 Eu₂O₃ (in equivalent oxide mol%) was prepared for the application of coating to the inner wall of high purity clear fused silica glass tubes.
- From the europium oxide (Eu₂O₃) coated silica powders with 99.0 mol% SiO₂ and 1.0 mol% Eu₂O₃, a silica sol of composition of 95.99 equivalent mol% of SiO₂ and 0.01 equivalent mol% of Eu₂O₃ was prepared by diluting with a slica sol containing the desired amount of silicon tetraethoxide (TEOS).
- Silica-germania sol containing 3 equivalent oxide mol% of germanium ethoxide [Ge(OC₂H₅)₄] was prepared through the hydrolysis of TEOS and [Ge(OC₂H₅)₄] with water and hydrochloric acid in presence of a mixed solvent of propan-1-ol and butan-2-ol. pH of the above sol was 1.0 ± 0.05.
- 1 equivalent oxide mol% of [Al(NO₃)₃.9H₂O] and 0.01 equivalent mol% of Eu₂O₃ through Eu₂O₃ coated SiO₂ powders (after baking at 100°C for 1h) were dispersed in the above silica sol under sonication (26 kHz) for 80 mins.
- The resultant dispersion after allowing to settle for 2 h, was used to coat the inner wall of the throughly cleaned silica glass tubes with inner diameter of 17.8 mm. The outer wall of the tubes were properely masked with a suitable substance (parafilm).
- Coating was performed by dipping the silica glass tubes with a speed of 10 cm/min into the dispersion and lifting the same tube from the above dispersions with the same speed.
- The coated tubes were dried in air at 100°C for 1h.
- Oxidation at temperatures of 610° , 700°, 825° and 950°C with 2 passes of the burner at each temperature maintaining a constant He/O₂ ratio of 1:5.
- The dehydration was carried out at a temperature of 1000°C with a Cl₂: O₂ ratio of 2 : 1 for a period of one hour.
- For sintering the temperature was increased in 4 steps up to 1220°C, each step consisting of 2 passes of the burner. GeCl₄ was added in controlled quantities during this stage with the input oxygen with two passes at 1220°C in order to adjust the NA of the preform / fibre.
- The tube was further heated to increase the temperature stepwise to 1600°C for complete sintering of the Ge, Eu & Al containing coated layer. During sintering O₂ and He flow was in the ratio of of 4:1.
- The collapsing was done in 3 steps in the usual manner with positive oxygen pressure of 4 psi inside the tube to avoid any deformation in shape or geometry and excessive evaporation of GeO₂ or other oxides from the core.
- The core:clad ratio before overcladding was 7.2:125. The NA measured in the fibre was 0.14 ± 0.01.
- The presence of Eu in the core was established from the characteristic fluoresence at 624 nm in the preform sample when excited at 392 nm.
- Spectral attenuation was measured in the fibre from 400 nm to 800 nm.

### EXAMPLE 4

### Tb-doped fibre

- Amorphous silica microspheres synthesized by hydrolysis of tetraethoxyorthosilicate (Stober method) were dispersed in a solution of terbium nitrate (kept in an ice bath) in a proportion of 98.5 mol% SiO₂ and 1.5 mol% Tb₂O₃ under sonication followed by the addition of aqueous ammonia by known process. The resulting product was washed with water followed by centrifugation and drying under vacuum.
- A stable dispersion of composition 95.9SiO₂: 2GeO₂: 2Al₂O₃: 0.1 Tb₂O₃ (in equivalent oxide mol%) was prepared for the application of coating to the inner wall of high purity clear fused silica glass tubes.
- From the terbium oxide (Tb₂O₃) coated silica powders with 98.5 mol% SiO₂ and 1.5 mol% Tb₂O₃, a silica sol of composition of 95.9 equivalent mol% of SiO₂ and 0.1 equivalent mol% of Tb₂O₃ was prepared by diluting with a slica sol containing the desired amount of silicon tetraethoxide (TEOS).
- Silica-germania sol containing 2 equivalent oxide mol% of germanium ethoxide [Ge(OC₂H₅)₄] was prepared through the hydrolysis of TEOS and [Ge(OC₂H₅)₄] with water and hydrochloric acid in presence of a mixed solvent of propan-1-ol and butan-2-ol. pH of the above sol was 1.2 ± 0.05.
- 2 equivalent oxide mol% of [Al(NO₃)₃.9H₂O] and 0.1 equivalent mol% of Tb₂O₃ through Tb₂O₃ coated SiO₂ powders (after baking at 100°C for 1h) were dispersed in the above silica sol under sonication (26 kHz) for 80 mins.
- The resultant dispersion after allowing to settle for 2 h, was used to coat the inner wall of the throughly cleaned silica glass tubes with inner diameter of 20.1 mm. The outer wall of the tubes were properely masked with a suitable substance (parafilm).
- Coating was performed by dipping the silica glass tubes with a speed of 10 cm/min into the dispersion and lifting the same tube from the above dispersions with the same speed.
- The coated tubes were dried in air at 150°C for 0.5h.
- Oxidation at temperatures of 720°, 825° and 950°C with 2 passes of the burner at each temperature maintaining a constant He/O₂ ratio of 1:6.
- The dehydration was carried out at a temperature of 950°C with a Cl₂: O₂ ratio of 2.5 : I for a period of one hour.
- For sintering the temperature was increased in 3 steps up to 1200°C, each step consisting of 2 passes of the burner. GeCl₄ was added in controlled quantities with the input oxygen during the passes at 1200°C in order to adjust the NA of the preform / fibre.
- The tube was further heated to increase the temperature stepwise to 1650°C for complete sintering of the Ge, Tb & A1 containing coated layer. During sintering O₂ and He flow was in the ratio of of 4:1.
- The collapsing was done in 4 steps in the usual manner with positive oxygen pressure of 4 psi inside the tube to avoid any deformation in shape or geometry and excessive evaporation of GeO₂ or other oxides from the core.
- Overcladding was done to reduce the core:clad ratio to 5:125. The NA measured in the fibre was 0.11 ± 0.01.
- The preform sample was excited at 355 nm and 400 nm and characteristic fluoresence of Tb was measured at 533 nm and 580 nm.
- Spectral attenuation was measured in the fibre from 400 nm to 800 nm

**Comparison of the characteristics of RE-doped fibre.fabricated at CGCRI using REcoated silica nano particles w.r.t. commercially available fibres for special applications**

| **Parameters** | **Commercial fibre** | **CGCRI fibre** |
|---|---|---|
| Clad composition | SiO₂ or SiO₂ - P₂O₅ -F | Same |
| Core composition | SiO₂ +GeO₂ +Al₂O₃ + Er₂O₃ (+P₂O₅) | Same |
| Numerical aperture | 0.15 - 0.30 | 0.10 - 0.30 |
| Cut-off wavelength | 850 - 1450 nm | 850 - 1450 nm |
| RE-ion concentration | 50 - 2000 ppm | 50 - 4000 ppm |
| Fibre diameter | 125 ± 1 µm | 125 ± 1 µm |
| Coating diameter | 245 µm (nominal) | 245 µm |
| Mode Field Diameter | 3.5 - 8.0 µm | 3.0 - 8.0 µm |

**The main advantages of the present invention are:**
1. It provides a process of fabricating RE doped preforms and optical fibres by using RE coated silica nanoparticles as precursors. The RE (Er, Nd, Eu etc.) coated silica nanoparticles are prepared by sonochemical method.
2. The deposition of a porous soot layer at high temperature (1000°C or above) by CVD process inside a fused silica glass tube or on a seed rod (VAD or OVD apparatus) is eliminated for formation of the core. Instead a thin silica gel coating containing other dopants in desired proportions is applied through a silica sol at ambient temperature.
3. The method described in 2 above ensures a better control of the characteristics of the coated layer like porosity, thickness etc. and uniformity along the length of the tube.
4. The diffculties and uncertainties involved in incorporation of the rare-earth ions in desired concentration into the porous soot layer by the solution-doping technique and such other methods are eliminated.
5. The rare-earth oxide coated silica nanoparticles are dispersed at ambient temperature in the silica sol mentioned above under sonication thereby eliminating the possibility of formation of the microcrystallites and clusters of rare-earth ions as in the conventional techniques.
6. The possibility of evaporation of RE salts at high temperatures is considerably eliminated due to the direct addition of RE oxides which prevents change in composition including variation of RE concentration in the core and also reduces the possibility of formation of RE dip at the core centre.
7. The process ensures better control of RE concentration in the doped region and homogeneous distribution of RE ions along the radial direction as well as throughout the length of the preform.
8. The RE incorporation efficiency is much higher compared to the conventional techniques due to direct addition of the RE oxides in to the dispersion.
9. The numerical aperture of the fibre is varied from 0.10 to 0.30 maintaining RE concentration in the core between 50 to 4000 ppm to produce fibres suitable for application as amplifiers, fibre lasers and sensors or different purposes.
10. The addition of Ge(OET)₄ at ambient temperature in the silica sol above reduces the quantity of GeCl₄ which is required at high temperature to achieve the desired NA.
11. The time period of processing the silica tube at high temperature and the number of steps involved for doping of RE ions by the conventional techniques for fabrication of the preform are considerably reduced.
12. The processing of the tube at ambient temperature before sintering and collapsing instead of high temperature involved in the CVD process makes the process less sensitive to the process parameters unlike the conventional processes.
13. The advantages described above increases the reproducibilty and reliability of the process to a great extent.
14. The requirement of precision equipments for control of porous soot deposition, RE incorporation etc. during fabrication of the preform is considerably eliminated which will reduce the capital investment and cost of the product.
15. All the above advantages combined make the process simple and more economic than the conventional processes.

## Claims

1. A process for making rare earth doped optical fibre using stable dispersions (sol) of rare earth (RE) oxide coated silica nanoparticles and applying a thin coating of the said silica sol containing suitable dopants selected from Ge, Al, P etc., on the inner surface of a silica glass tube.

2. A process as claimed in claim 1, said process comprising steps of:
(a) obtaining rare earth (RE) oxide coated silica nanoparticles by sonochemical method;
(b) preparing stable dispersions of the above RE containing powders in the desired proportion in presence of suitable dopants like Al³⁺, Ge⁴⁺etc. in a silica sol of Si (OC₂H₅)₄ under sonication,
(c) applying a thin coating of silica sol on the inner surface of high purity clear fused silica glass tubes by sol-gel dip coating technique;
(d) drying the coated layer in air at 70 to 150°C;
(e) mounting the tube on glass working lathe for processing by MCVD technique;
(f) dehydrating the coated layer inside the tube at a temperature in the range of 800-1200°C in presence of excess Cl₂;
(g) sintering the coated layer in presence of a mixture of oxygen and helium in the temperature range of 1400 to 1750°C for formation of the core;
(h) heating the tube gradually up to a temperature of 1900°C for further consolidation of the sintered layer;
(i) collapsing the tube by usual method at a temperature in the range of 2000-2300°C to obtain a preform;
(j) overcladding the preform with silica tube, and
(k) drawing fibres of standard dimensions from the preform by the conventional methods.

3. A process as claimed in claim 1 wherein, the RE oxide is selected from Eu₂O₃, Nd₂O₃,Tb₂O₃ and Er₂O₃ for preparation of the silica nanoparticles.

4. A process as claimed in claim 1 wherein, P₂O₅ and F doped synthetic cladding is deposited within a silica glass substrate tube prior to development of the coating by known method Modified Chemical Vapour Deposition (MCVD) process to obtain matched or depressed clad type structure in the preform.

5. A process as claimed in claim 1 wherein, the particle size of the RE coated SiO₂ powders ranges from 50 to 200 nm.

6. A process as claimed in claim 1 wherein, the composition in oxide mol% of SiO₂: Re₂O₃ in Re₂O₃ coated SiO₂ powders varies from 99.5 : 0.5 to 95 : 5.

7. A process as claimed in claim 1 wherein, the equivalent oxide mol% of SiO₂ in the dispersion varies from 98.5 to 90.5.

8. A process as claimed in claim 1 wherein, a silica sol prepared with Si(OC₂H₅)₄ was used as the diluent of the RE₂O₃ coated silica powder.

9. A process as claimed in claim 1 wherein, the equivalent oxide mol% of GeO₂ in the dispersion varies from 1.0 to 5.0.

10. A process as claimed in claim 1 wherein, Ge⁴⁺ was added through Ge(OC₂H₅)₄ in the silica sol.

11. A process as claimed in claim 1 wherein, the equivalent oxide mol% of Al₂O₃ in the dispersion ranges from 0.5 to 4.0.

12. A process as claimed in claim 1 wherein, Al₂O₃ is provided to the solvent in the form of aluminium salts such as chlorides, nitrates or any other salt soluble in the solvent.

13. A process as claimed in claim 1 wherein, the solution of aluminium salt is prepared using a solvent selected from alcohol and water.

14. A process as claimed in claim 1 wherein, the oxide mol% of Er₂O₃ in the dispersion ranges from 0.01 to 0.60.

15. A process as claimed in claim 1 wherein, strong mineral acids used for preparing the sol for dispersion are selected from hydrochloric or nitric acid.

16. A process as claimed in claim 1 wherein, the alcohol selected is soluable in the dispersion system.

17. A process as claimed in claim 1 wherein, the alcohol is selected from the group comprising of methyl alcohol, ethyl alcohol, propan-1-ol, propan-2-ol, butan-1-ol and butan-2-ol.

18. A process as claimed in claim 1 wherein, pH of the dispersion ranges from 1 to 5.

19. A process as claimed in claim 1 wherein, viscosity of the dispersion varies from 1 to 10 mPa s.

20. A process as claimed in claim 1 wherein, sonication time of the dispersion ranges from 30 to 200 minutes.

21. A process as claimed in claim 1 wherein, settling time of the dispersion varies from 1 to 10 hours.

22. A process as claimed in claim 1 wherein, lifting speed of the tube from the dispersion ranges from 4 to 15 cm/minutes.

23. A process as claimed in claim 1 wherein, baking temperature of the coated tube varies from 70° to 150°C.

24. A process as claimed in claim 1 wherein, baking time of the coated tube ranges from 0.5 to 5 hours.

25. A process as claimed in claim 1 wherein, the core composition is selected from the group comprising of RE₂O₃ +SiO₂+GeO_{2,} RE₂O₃ +SiO₂+GeO₂ +Al₂O_{3,} RE₂O₃ +SiO₂+GeO₂ +Al₂O₃ +P₂O₅ and RE₂O₃ +SiO₂+GeO₂ + P₂O_{5.}

26. A process as claimed in claim 1 wherein, the temperature of the RE oxide containing core layer is increased in steps of 50 to 200°C during sintering depending on the composition and Al/RE concentration of the core layer.

27. A process as claimed in claim 1 wherein, the mixture of O₂ and He is in the range of 3:1 to 9:1 during sintering.

28. A process as claimed in claim 1 wherein, source of chlorine is CCl₄ where helium is used as carrier gas.

29. A process as claimed in claim 1 wherein, the proportion of Cl₂: O₂ during drying varies from 1.5 : 1 to 3.5 : 1.

30. A process as claimed in claim 1 wherein, the dehydration period lies between 1 to 2 hours.

31. A process as claimed in claim 1 wherein, the core layer is sintered in the presence of germania to facilitate germania incorporation and to obtain appropriate numerical aperture value.

32. A process as claimed in claim 1 wherein, germania is supplied to the core layer during sintering by including GeCl₄ with the input oxygen.

33. A process as claimed in claim 1 wherein, the sintering is carried out at a temperature of 1200°C to 1400°C.

34. A process as claimed in claim 1 wherein, depending on the composition of the core, POCl₃ is added to the input gas mixture during sintering.

35. A process as claimed in claim 1 wherein, the core layer is doped with P₂O₅ to facilitate RE incorporation.

36. A process as claimed in claim 1 wherein, P₂O₅ and GeO₂ concentrations vary from 0.5 to 5.0 mol% and 3.0 to 25.0 mol% respectively in the RE doped core layer.

37. A process as claimed in claim 1 wherein, the numerical aperture of the fibre is varied from 0.10 to 0.30.

38. A process as claimed in claim 1 wherein, RE concentration in the core is maintained in the range of 50 to 4000 ppm to produce fibres suitable for application as amplifiers, fibre lasers and sensors or different purposes.

39. A process as claimed in claim 1 wherein, codopants like Al and other rare earths are added to the core doped with a selected RE to fabricate fibres containing various dopants in the core in the concentration range 50 to 5000 ppm and numerical aperture varying between 0.10 and 0.30.

40. A process as claimed in claim 1 wherein, the deposition of a porous soot layer at high temperature (1000°C or above) by CVD process inside a fused silica glass tube or on a seed rod (VAD or OVD apparatus) is eliminated for formation of the core.

41. A process as claimed in claim 1 wherein, better control is achieved over the characteristics of the coated layer like porosity, thickness etc. and uniformity along the length of the tube.

42. A process as claimed in claim 1 wherein, the diffculties and uncertainties involved in incorporation of the rare-earth ions in desired concentration into the porous soot layer by the solution-doping technique and such other methods are eliminated.

43. A process as claimed in claim 1 wherein, the rare-earth oxide coated silica nanoparticles are dispersed at ambient temperature in the silica sol mentioned above under sonication thereby eliminating the possibility of formation of the microcrystallites and clusters of rare-earth ions as in the conventional techniques.

44. A process as claimed in claim 1 wherein, the possibility of evaporation of RE salts at high temperatures is considerably eliminated due to the direct addition of RE oxides which prevents change in composition including variation of RE concentration in the core and also reduces the possibility of formation of RE dip at the core centre.

45. A process as claimed in claim 1 wherein, the process ensures better control of RE concentration in the doped region and homogeneous distribution of RE ions along the radial direction as well as throughout the length of the preform.

46. A process as claimed in claim 1 wherein, the RE incorporation efficiency is much higher compared to the conventional techniques beacuse of direct addition of the RE oxides into the dispersion instead of the corresponding salt by the conventional techniques thereby minimising the possibility of evaporation and change in concentration..

47. A process as claimed in claim 1 wherein, the addition of Ge(OET)₄ at ambient temperature in the silica sol above reduces the quantity of GeCl₄ which is required at high temperature to achieve the desired NA.

48. A process as claimed in claim 1 wherein, the time period of processing the silica tube at high temperature and the number of steps involved for doping of RE ions by the conventional techniques for fabrication of the preform are considerably reduced.

49. A process as claimed in claim 1 wherein, the processing of the tube at ambient temperature before sintering and collapsing instead of high temperature involved in the CVD process makes the process less sensitive to the process parameters unlike the conventional processes.

50. A process as claimed in claim 1 wherein, the advantages described above increases the reproducibilty and reliability of the process to a great extent.

51. A process as claimed in claim 1 wherein, the requirement of precision equipments for control of porous soot deposition, RE incorporation etc. during fabrication of the preform is considerably eliminated which will reduce the capital investment and cost of the product.

52. A process as claimed in claim 1 wherein, the advantages combined make the process simple and more economic than the conventional processes.

## Patentansprüche

1. Verfahren zum Herstellen einer mit seltenen Erden dotierten optischen Faser unter Verwendung stabiler Dispersionen (Sol) von mit einem Oxid seltener Erden (RE) beschichteten Nanopartikeln aus Siliziumdioxid und zum Auftragen einer dünnen Beschichtung des besagten Siliziumdioxidsols, das geeignete Dotierungsstoffe enthält, welche ausgewählt werden unter Ge, Al, P usw., auf die innere Oberfläche eines Siliziumdioxidglasrohres.

2. Verfahren gemäß Anspruch 1; wobei das besagte Verfahren die folgenden Schritte umfasst:
(a) ein Erzielen von mit einem Oxid seltener Erden (RE) beschichteten Nanopartikeln aus Siliziumdioxid durch ein sonochemisches Verfahren;
(b) ein Zubereiten stabiler Dispersionen der obigen RE enthaltenden Pulver in dem gewünschten Verhältnis in Anwesenheit geeigneter Dotierungsstoffe wie Al³⁺, Ge⁴⁺ usw. in einem Siliziumdioxidsol aus Si(OC₂H₅)₄ unter Beschallung;
c) ein Auftragen einer dünnen Beschichtung von Siliziumdioxidsol auf die innere Oberfläche von klaren geschmolzenen Siliziumdioxidglasrohren von hoher Reinheit mit Hilfe der Sol-Gel-Tauchbeschichtungstechnik;
d) ein Trocknen der beschichteten Lage an der Luft bei 70 bis 150°C;
e) ein Montieren des Rohres auf einer Drehbank zur Glasbearbeitung für die Bearbeitung durch eine MCVD Technik;
f) ein Dehydratisieren der beschichteten Lage innerhalb des Rohres bei einer Temperatur in dem Bereich von 800-1200°C in Anwesenheit eines Überschusses an Cl₂;
g) ein Sintern der beschichteten Lage in Anwesenheit einer Mischung aus Sauerstoff und Helium in dem Temperaturbereich von 1400-1750°C zur Bildung des Kerns;
h) ein graduelles Erwärmen des Rohres bis auf eine Temperatur von 1900°C für eine weitere Konsolidierung der gesinterten Lage;
i) ein Kollabieren des Rohres durch ein gewöhnliches Verfahren bei einer Temperatur von 2000-2300°C, um eine Vorform zu erhalten;
j) ein Übermanteln der Vorform mit dem Siliziumdioxidrohr, und
k) ein Ziehen von Fasern mit den Standarddimensionen aus der Vorform durch herkömmliche Verfahren.

3. Verfahren gemäß Anspruch 1, bei dem das RE Oxid ausgewählt wird aus Eu₂O₃, Nd₂O₃, Tb₂O₃ und Er₂O₃ zur Herstellung der Nanopartikel aus Siliziumdioxid.

4. Verfahren gemäß Anspruch 1, bei dem ein mit P₂O₅ und F dotierter, synthetischer Überzug ins Innere eines Siliziumdioxidglassubstratrohres gelegt wird, vor der Entwicklung der Beschichtung durch ein bekanntes Verfahren wie etwa durch das Verfahren der modifizierten, chemischen Dampfphasenabscheidung (MCVD), um in der Vorform eine passende oder versetzte Struktur vom Überzugstyp zu erhalten.

5. Verfahren gemäß Anspruch 1, bei dem die Partikelgröße der mit RE beschichteten SiO₂-Pulver in dem Bereich von 50 bis 200 nm liegt.

6. Verfahren gemäß Anspruch 1, bei dem die Zusammensetzung als Oxid in Molprozent von SiO₂:RE₂O₃ in den mit RE₂O₃ beschichteten SiO₂-Pulvern von 99,5:0,5 bis 95:5 variiert.

7. Verfahren gemäß Anspruch 1, bei dem das Äquivalent als Oxid in Molprozent von SiO₂ in der Dispersion von 98,5 bis 90,5 variiert.

8. Verfahren gemäß Anspruch 1, bei dem ein mit Si(OC₂H₅)₄ hergestelltes Siliziumdioxidsol als Verdünnungsmittel des mit RE₂O₃ beschichteten Siliziumdioxidpulvers verwendet wurde.

9. Verfahren gemäß Anspruch 1, bei dem das Äquivalent als Oxid in Molprozent von GeO₂ in der Dispersion von 1,0 bis 5,0 variiert.

10. Verfahren gemäß Anspruch 1, bei dem Ge⁴⁺ durch Ge(OC₂H₅)₄ in das Siliziumdioxidsol hinzugetan wurde.

11. Verfahren gemäß Anspruch 1, bei dem das Äquivalent als Oxid in Molprozent von Al₂O₃ in der Dispersion in dem Bereich von 0,5 bis 4,0 liegt.

12. Verfahren gemäß Anspruch 1, bei dem Al₂O₃ dem Lösungsmittel in der Form von Aluminiumsalzen, etwa von Chloriden, Nitraten oder in der Form irgendeines anderen Salzes geliefert wird, welche in dem Lösungsmittel löslich sind.

13. Verfahren gemäß Anspruch 1, bei dem die Lösung eines Aluminiumsalzes zubereitet wird unter Verwendung eines Lösungsmittels, das unter Alkohol und Wasser ausgewählt wird.

14. Verfahren gemäß Anspruch 1, bei dem der Molprozentsatz an Oxid von Er₂O₃ in der Dispersion in dem Bereich von 0,01 bis 0,60 liegt.

15. Verfahren gemäß Anspruch 1, bei dem starke Mineralsäuren, welche für die Herstellung des Sols für die Dispersion verwendet werden, unter der Hydrochlorsäure oder der Salpetersäure ausgewählt werden.

16. Verfahren gemäß Anspruch 1, bei dem der ausgewählte Alkohol in dem Dispersionssystem löslich ist.

17. Verfahren gemäß Anspruch 1, bei dem der Alkohol ausgewählt wird aus der Gruppe bestehend aus Methylalkohol, Ethylalkohol, Propan-1-ol, Propan-2-ol, Butan-1-ol und Butan-2-ol.

18. Verfahren gemäß Anspruch 1, bei dem der pH-Wert der Dispersion in dem Bereich von 1 bis 5 liegt.

19. Verfahren gemäß Anspruch 1, bei dem die Viskosität der Dispersion von 1 bis 10 mPa·s variiert.

20. Verfahren gemäß Anspruch 1, bei dem die Beschallungszeit der Dispersion in dem Bereich von 30 bis 200 Minuten liegt.

21. Verfahren gemäß Anspruch 1, bei dem die Absetzzeit der Dispersion von 1 bis 10 Stunden variiert.

22. Verfahren gemäß Anspruch 1, bei dem die Hebegeschwindigkeit des Rohres aus der Dispersion in dem Bereich von 4 bis 15 cm/Minute liegt.

23. Verfahren gemäß Anspruch 1, bei dem die Backtemperatur des beschichteten Rohres von 70° bis 150°C variiert.

24. Verfahren gemäß Anspruch 1, bei dem die Backzeit des beschichteten Rohres von 0,5 bis 5 Stunden variiert.

25. Verfahren gemäß Anspruch 1, bei dem die Kernzusammensetzung ausgewählt wird aus der Gruppe bestehend aus RE₂O₃ + SiO₂ + GeO₂, RE₂O₃ + SiO₂ + GeO₂ + Al₂O₃, RE₂O₃ + SiO₂ + GeO₂ + Al₂O₃ + P₂O₅ und RE₂O₃ + SiO₂ + GeO₂ + P₂O₅.

26. Verfahren gemäß Anspruch 1, bei dem die Temperatur der das RE-Oxid enthaltenden Kernlage während des Sinterns schrittweise von 50° bis auf 200°C erhöht wird in Abhängigkeit von der Zusammensetzung und von der Al/RE Konzentration der Kernlage.

27. Verfahren gemäß Anspruch 1, bei dem die Mischung von O₂ und He während des Sinterns in dem Bereich von 3:1 bis 9:1 liegt.

28. Verfahren gemäß Anspruch 1, bei dem die Quelle des Chlors CCl₄ ist, wobei Helium als ein Trägergas verwendet wird.

29. Verfahren gemäß Anspruch 1, bei dem das Verhältnis von Cl₂:O₂ während des Trocknens in dem Bereich von 1,5:1 bis 3,5:1 variiert.

30. Verfahren gemäß Anspruch 1, bei dem die Dehydrationsperiode zwischen 1 und 2 Stunden liegt.

31. Verfahren gemäß Anspruch 1, bei dem die Kernlage in Gegenwart von Germaniumoxid gesintert wird, um die Einbindung von Germaniumoxid zu vereinfachen und um einen geeigneten, numerischen Aperturwert zu erzielen.

32. Verfahren gemäß Anspruch 1, bei dem Germaniumoxid zu der Kernlage während des Sinterns zugeführt wird, indem man GeCl₄ bei der Sauerstoffzufuhr mit einschließt.

33. Verfahren gemäß Anspruch 1, bei dem das Sintern bei einer Temperatur von 1200°C bis 1400°C ausgeführt wird.

34. Verfahren gemäß Anspruch 1, bei dem während des Sinterns und in Abhängigkeit von der Zusammensetzung des Kerns POCl₃ zu der Zufuhr der Gasmischung hinzugegeben wird.

35. Verfahren gemäß Anspruch 1, bei dem die Kernlage mit P₂O₅ dotiert wird, um die RE Einbindung zu vereinfachen.

36. Verfahren gemäß Anspruch 1, bei dem die Konzentrationen an P₂O₅ und GeO₂ in der mit RE dotierten Kernlage von 0,5 bis 5,0 Molprozent bzw. von 3,0 bis 25,0 Molprozent variieren.

37. Verfahren gemäß Anspruch 1, bei dem die numerische Apertur der Faser von 0,10 bis 0,30 variiert.

38. Verfahren gemäß Anspruch 1, bei dem die RE Konzentration in dem Kern in dem Bereich von 50 bis 4000 ppm gehalten wird, um Fasern herzustellen, die geeignet sind für die Anwendung als Verstärker, Faserlaser und Sensoren für verschiedene Zwecke.

39. Verfahren gemäß Anspruch 1, bei dem die Codotierungsmittel wie Al und andere seltene Erden zu dem mit einem ausgewählten RE dotierten Kern hinzugegeben werden, um Fasern herzustellen, welche verschiedene Dotierungsmittel in dem Kern in dem Konzentrationsbereich von 50 bis 5000 ppm enthalten und eine numerische Apertur, welche zwischen 0,10 und 0,30 variiert.

40. Verfahren gemäß Anspruch 1, bei dem die Ablagerung einer porösen Russlage bei hoher Temperatur (1000°C oder darüber) durch ein CVD-Verfahren im Innern eines geschmolzenen Siliziumdioxidglasrohres oder auf einem Keimstab (VAD oder OVD Apparat) eliminiert wird für die Bildung des Kernes.

41. Verfahren gemäß Anspruch 1, bei dem eine bessere Steuerung über die Merkmale der beschichteten Lage erreicht wird, wie Porosität, Dicke usw. und Gleichmäßigkeit entlang der Länge des Rohres.

42. Verfahren gemäß Anspruch 1, bei dem die Schwierigkeiten und Unsicherheiten beseitigt werden, welche bei dem Einbinden von Ionen der seltenen Erden in der gewünschten Konzentration in die poröse Russlage durch die Technik der Lösungs-Dotierung und durch andere solcher Verfahren impliziert sind.

43. Verfahren gemäß Anspruch 1, bei dem die mit einem Oxid von seltenen Erden beschichteten Nanopartikel aus Siliziumdioxid bei Umgebungstemperatur in dem oben erwähnten Siliziumdioxidsol unter Beschallung dispergiert werden, wodurch die Möglichkeit der Bildung von Mikrokristalliten und von Clustern der Ionen der seltenen Erden, wie dies bei den herkömmlichen Techniken der Fall ist, beseitigt werden.

44. Verfahren gemäß Anspruch 1, bei dem die Möglichkeit der Verdampfung von RE Salzen bei hohen Temperaturen in beträchtlichem Maß beseitigt wird infolge der direkten Zugabe von RE-Oxiden, was eine Veränderung bei der Zusammensetzung einschließlich einer Veränderung bei der RE Konzentration in dem Kern verhindert, und was auch die Möglichkeit der Bildung einer RE Lösung an dem Kernzentrum vermindert.

45. Verfahren gemäß Anspruch 1, bei dem das Verfahren eine bessere Steuerung der RE Konzentration in dem dotierten Bereich und eine gleichmäßige Verteilung der RE Ionen sowohl entlang der radialen Richtung gewährleistet als auch über die Länge der Vorform hinweg gewährleistet.

46. Verfahren gemäß Anspruch 1, bei dem die Wirksamkeit der RE Einbindung weitaus größer ist verglichen mit herkömmlichen Techniken wegen der direkten Zugabe der RE-Oxide in die Dispersion anstelle des entsprechenden Salzes durch die herkömmlichen Techniken, wodurch die Möglichkeit einer Verdampfung und einer Veränderungen der Konzentration minimiert wird.

47. Verfahren gemäß Anspruch 1, bei dem die Zugabe von Ge(OET)₄ bei Umgebungstemperatur in das obige Siliziumdioxidsol die Menge an GeCl₄ vermindert, welche bei hoher Temperatur erforderlich ist, um das gewünschte NA zu erzielen.

48. Verfahren gemäß Anspruch 1, bei dem die Zeitdauer für die Bearbeitung des Siliziumdioxidrohres bei hoher Temperatur und die Anzahl der Schritte, welche bei der Dotierung der RE Ionen durch herkömmliche Techniken zur Herstellung der Vorform impliziert sind, beträchtlich vermindert wird.

49. Verfahren gemäß Anspruch 1, bei dem die Bearbeitung des Rohres bei Umgebungstemperatur vor dem Sintern und Kollabieren anstelle der Bearbeitung bei hoher Temperatur, die bei dem CVD Verfahren impliziert ist, das Verfahren weniger empfindlich gegenüber den Verfahrensparametern macht, anders als bei den herkömmlichen Verfahren.

50. Verfahren gemäß Anspruch 1, bei dem die oben beschriebenen Vorteile die Reproduzierbarkeit und Zuverlässigkeit des Verfahrens um ein wesentliches Ausmaß erhöht.

51. Verfahren gemäß Anspruch 1, bei dem die Anforderung an Präzisionsausrüstungen für die Steuerung der porösen Russablagerung, die RE-Einbindung usw. während der Herstellung der Vorform in beträchtlichem Maß aufgehoben worden ist, was die Kapitalinvestition und die Unkosten des Produktes vermindert.

52. Verfahren gemäß Anspruch 1, bei dem die kombinierten Vorteile das Verfahren einfach und wirtschaftlicher machen als die herkömmlichen Verfahren.

## Revendications

1. Procédé pour la fabrication d'une fibre optique dopée par une terre rare en utilisant des dispersions stables (sol) de nanoparticules de silice revêtue par un oxyde de terre rare (RE) et en appliquant un revêtement mince dudit sol de silice contenant des dopants appropriés choisis parmi Ge, Al, P, etc., sur la surface interne d'un tube de verre de silice.

2. Procédé suivant la revendication 1, ledit procédé comprenant les étapes:
(a) d'obtention de nanoparticules de silice revêtue par un oxyde de terre rare (RE) par un procédé sonochimique;
(b) de préparation de dispersions stables des poudres contenant RE ci-dessus dans la proportion désirée en présence de dopants appropriés comme Al³⁺, Ge⁴⁺, etc. dans un sol de silice de Si(OC₂H₅)₄ sous sonication;
(c) d'application d'un revêtement mince de sol de silice sur la surface interne de tubes de verre de silice fondue claire de haute pureté par une technique de revêtement par immersion sol-gel;
(d) de séchage de la couche revêtue dans l'air à 70 à 150°C;
(e) de montage du tube sur un tour de travail du verre pour un traitement par une technique MCVD;
(f) de déshydratation de la couche revêtue à l'intérieur du tube à une température dans l'intervalle de 800-1200°C en présence d'un excès de Cl₂;
(g) de frittage de la couche revêtue en présence d'un mélange d'oxygène et d'hélium dans l'intervalle de température de 1400 à 1750°C pour la formation du coeur;
(h) de chauffage du tube graduellement jusqu'à une température de 1900°C pour une consolidation supplémentaire de la couche frittée;
(i) de dépression du tube par un procédé habituel à une température dans l'intervalle de 2000-2300°C pour obtenir une préforme;
(j) de placage sur le dessus de la préforme avec le tube de silice; et
(k) d'étirage de fibres de dimensions standards à partir de la préforme par les procédés conventionnels.

3. Procédé suivant la revendication 1, dans lequel l'oxyde de RE est choisi parmi Eu₂O_{3,} Nd₂O₃, Tb₂O₃ et Er₂O₃ pour la préparation des nanoparticules de silice.

4. Procédé suivant la revendication 1, dans lequel un placage synthétique dopé par P₂O₅ et F est déposé à l'intérieur d'un tube de substrat de verre de silice avant le développement du revêtement par un procédé connu comme un procédé de dépôt chimique en phase vapeur modifié (MCVD) pour obtenir une structure de type placage adapté ou déprimé dans la préforme.

5. Procédé suivant la revendication 1, dans lequel la taille de particules des poudres de SiO₂ revêtue de RE varie de 50 à 200 nm.

6. Procédé suivant la revendication 1, dans lequel la composition en % en moles d'oxyde de SiO₂:RE₂O₃ dans des poudres de SiO₂ revêtue de RE₂O₃ varie de 99,5:0,5 à 95:5.

7. Procédé suivant la revendication 1, dans lequel le % en moles d'oxyde équivalent de SiO₂ dans la dispersion varie de 98,5 à 90,5.

8. Procédé suivant la revendication 1, dans lequel un sol de silice préparé avec Si(OC₂H₅)₄ a été utilisé en tant que diluant de la poudre de silice revêtue de RE₂O₃.

9. Procédé suivant la revendication 1, dans lequel le % en moles d'oxyde équivalent de GeO₂ dans la dispersion varie de 1,0 à 5,0.

10. Procédé suivant la revendication 1, dans lequel Ge⁴⁺ a été ajouté par Ge(OC₂H₅)₄ dans le sol de silice.

11. Procédé suivant la revendication 1, dans lequel le % en moles d'oxyde équivalent de Al₂O₃ dans la dispersion varie de 0,5 à 4,0.

12. Procédé suivant la revendication 1, dans lequel Al₂O₃ est apporté au solvant sous la forme de sels d'aluminium tels que des chlorures, des nitrates ou n'importe quel autre sel soluble dans le solvant.

13. Procédé suivant la revendication 1, dans lequel la solution de sel d'aluminium est préparée en utilisant un solvant choisi parmi un alcool et l'eau.

14. Procédé suivant la revendication 1, dans lequel le % en moles d'oxyde de Er₂O₃ dans la dispersion varie de 0,01 à 0,60.

15. Procédé suivant la revendication 1, dans lequel des acides minéraux forts utilisés pour la préparation du sol pour une dispersion sont choisis parmi l'acide chlorhydrique ou nitrique.

16. Procédé suivant la revendication 1, dans lequel l'alcool choisi est soluble dans le système de dispersion.

17. Procédé suivant la revendication 1, dans lequel l'alcool est choisi dans le groupe comprenant l'alcool de méthyle, l'alcool d'éthyle, le propan-1-ol, le propan-2-ol, le butan-1-ol et le butan-2-ol.

18. Procédé suivant la revendication 1, dans lequel le pH de la dispersion varie de 1 à 5.

19. Procédé suivant la revendication 1, dans lequel la viscosité de la dispersion varie de 1 à 10 mPa·s.

20. Procédé suivant la revendication 1, dans lequel le temps de sonication de la dispersion varie de 30 à 200 minutes.

21. Procédé suivant la revendication 1, dans lequel le temps de stabilisation de la dispersion varie de 1 à 10 heures.

22. Procédé suivant la revendication 1, dans lequel la vitesse de montée du tube à partir de la dispersion varie de 4 à 15 cm/minute.

23. Procédé suivant la revendication 1, dans lequel la température de cuisson du tube revêtu varie de 70° à 150°C.

24. Procédé suivant la revendication 1, dans lequel le temps de cuisson du tube revêtu varie de 0,5 à 5 heures.

25. Procédé suivant la revendication 1, dans lequel la composition du coeur est choisie dans le groupe comprenant RE₂O₃ + SiO₂ + GeO₂, RE₂O₃ + SiO₂ + GeO₂ + Al₂O₃, RE₂O₃ + SiO₂ + GeO₂ + Al₂O₃ + P₂O₅ et RE₂O₃ + SiO₂ + GeO₂ + P₂O₅.

26. Procédé suivant la revendication 1, dans lequel la température de la couche de coeur contenant l'oxyde de RE est augmentée en étapes de 50 à 200°C durant le frittage dépendant de la composition et de la concentration de A1/RE de la couche de coeur.

27. Procédé suivant la revendication 1, dans lequel le mélange de O₂ et de He est dans l'intervalle de 3:1 à 9:1 durant le frittage.

28. Procédé suivant la revendication 1, dans lequel la source de chlore est CCl₄ où l'hélium est utilisé comme un gaz porteur.

29. Procédé suivant la revendication 1, dans lequel la proportion de Cl₂:O₂ durant le séchage varie de 1,5:1 à 3,5:1.

30. Procédé suivant la revendication 1, dans lequel la période de déshydratation se trouve entre 1 et 2 heures.

31. Procédé suivant la revendication 1, dans lequel la couche de coeur est frittée en présence d'oxyde de germanium pour faciliter l'incorporation d'oxyde de germanium et pour obtenir une valeur d'ouverture numérique appropriée.

32. Procédé suivant la revendication 1, dans lequel l'oxyde de germanium est approvisionné à la couche de coeur durant le frittage en incluant GeCl₄ avec l'entrée d'oxygène.

33. Procédé suivant la revendication 1, dans lequel le frittage est réalisé à une température de 1200°C à 1400°C.

34. Procédé suivant la revendication 1, dans lequel, dépendant de la composition du coeur, POCl₃ est ajouté à l'entrée de mélange gazeux durant le frittage.

35. Procédé suivant la revendication 1, dans lequel la couche de coeur est dopée avec P₂O₅ pour faciliter l'incorporation de RE.

36. Procédé suivant la revendication 1, dans lequel les concentrations de P₂O₅ et de GeO₂ varient de 0,5 à 5,0% en moles et de 3,0 à 25,0% en moles respectivement dans la couche de coeur dopée par RE.

37. Procédé suivant la revendication 1, dans lequel l'ouverture numérique de la fibre est variée de 0,10 à 0,30.

38. Procédé suivant la revendication 1, dans lequel la concentration de RE dans le coeur est maintenue dans l'intervalle de 50 à 4000 ppm pour produire des fibres appropriées pour une application en tant qu'amplificateurs, lasers et détecteurs à fibres ou des objectifs différents.

39. Procédé suivant la revendication 1, dans lequel des co-dopants comme A1 et d'autres terres rares sont ajoutés au coeur dopé avec une RE choisie pour fabriquer des fibres contenant divers dopants dans le coeur dans l'intervalle de concentration de 50 à 5000 ppm et l'ouverture numérique variant entre 0,10 et 0,30.

40. Procédé suivant la revendication 1, dans lequel le dépôt d'une couche de suie poreuse à haute température (1000°C ou plus) par un procédé CVD à l'intérieur d'un tube de verre de silice fondue ou sur un barreau d'ensemencement (appareil VAD ou OVD) est éliminé pour la formation du coeur.

41. Procédé suivant la revendication 1, dans lequel une meilleure régulation est atteinte sur les caractéristiques de la couche revêtue comme la porosité, l'épaisseur, etc. et l'uniformité sur la longueur du tube.

42. Procédé suivant la revendication 1, dans lequel les difficultés et les incertitudes impliquées dans l'incorporation des ions de terre rare dans une concentration désirée dans la couche de suie poreuse par la technique de dopage en solution et d'autres procédés de ce type sont éliminés.

43. Procédé suivant la revendication 1, dans lequel les nanoparticules de silice revêtue par un oxyde de terre rare sont dispersées à la température ambiante dans le sol de silice mentionné ci-dessus sous sonication, éliminant ainsi la possibilité de formation des microcristallites et des agrégats d'ions de terre rare dans les techniques conventionnelles.

44. Procédé suivant la revendication 1, dans lequel la possibilité d'évaporation de sels de RE à de hautes températures est considérablement éliminée dû à l'ajout direct d'oxydes de RE qui empêche un changement dans la composition incluant une variation de la concentration de RE dans le coeur et réduit également la possibilité de formation d'une solution de RE au centre du coeur.

45. Procédé suivant la revendication 1, où le procédé assure une meilleure régulation de la concentration de RE dans la région dopée et une distribution homogène d'ions de RE le long de la direction radiale aussi bien que sur toute la longueur de la préforme.

46. Procédé suivant la revendication 1, dans lequel le rendement d'incorporation de RE est beaucoup plus élevé, comparé à celui de techniques conventionnelles, à cause de l'ajout direct des oxydes de RE dans la dispersion à la place du sel correspondant par les techniques conventionnelles, minimisant ainsi la possibilité d'évaporation et de changement dans la concentration.

47. Procédé suivant la revendication 1, dans lequel l'ajout de Ge(OET)₄ à la température ambiante dans le sol de silice ci-dessus réduit la quantité de GeCl₄ qui est requise à une température élevée pour atteindre le NA désiré.

48. Procédé suivant la revendication 1, dans lequel la période de temps du traitement du tube de silice à une température élevée et le nombre d'étapes impliquées pour le dopage des ions de RE par les techniques conventionnelles pour la fabrication de la préforme sont considérablement réduits.

49. Procédé suivant la revendication 1, dans lequel le traitement du tube à la température ambiante avant le frittage et la dépression au lieu de la température élevée impliquée dans le procédé CVD rend le procédé moins sensible aux paramètres de procédé contrairement aux procédés conventionnels.

50. Procédé suivant la revendication 1, dans lequel les avantages décrits ci-dessus augmentent la reproductibilité et la fiabilité du procédé dans une grande mesure.

51. Procédé suivant la revendication 1, dans lequel l'exigence d'équipements de précision pour la régulation d'un dépôt de suie poreuse, d'une incorporation de RE, etc. durant la fabrication de la préforme est considérablement éliminée, ce qui réduira l'investissement de capitaux et le coût du produit.

52. Procédé suivant la revendication 1, dans lequel les avantages combinés rendent le procédé simple et plus économique par rapport aux procédés conventionnels.
